# EUROPEAN PATENT APPLICATION

(11) **EP 4 800 428 A1**
(43) Date of publication of application: **02.09.2026**
(21) Application number: 25160521.8
(22) Date of filing: 27.02.2025
(51) Int. Cl.: G01S 7/40, G09B 9/00, G09B 9/54, G01S 7/41, G01S 7/48, G01S 13/86, G01S 13/931

(54) **METHOD AND SYSTEM FOR GENERATING SIMULATED RADAR DATA USING A NEURAL NETWORK AND METHOD FOR TRAINING THE NEURAL NETWORK**

(71) Applicant: aiMotive Kft., 1025 Budapest (HU)
(72) Inventor: MATUSZKA, Tamás, 1063 Budapest (HU); BOLGÁR, Bence Márton, 1183 Budapest (HU); KOVÁCS, Péter, 4300 Nyírbátor (HU); TULIPÁNT, Zoltán, 4025 Debrecen (HU); TÓTH, Máté, 5000 Szolnok (HU); BENDEFY, Zoltán Kálmán, 1171 Budapest (HU); RÁCZ, Gergely Ferenc, 2013 Pomáz (HU); VARAJTI, Ádám, 6300 Kalocsa (HU)
(74) Representative: Hofmann, Matthias

(57) **Abstract**

The present disclosure relates to a method and system for generating simulated radar data using a neural network and a method for training the neural network. The simulation method includes: receiving environment data; generating a learned input representation based on the environment data; generating, using the neural network, one or more radar feature maps based on the learned input representation, wherein the one or more radar feature maps includes a channel of objectness value configured to indicate whether a target exists in a corresponding pixel of the one or more radar feature maps; and generating the radar data based on the learned input representation and the one or more radar feature maps.

## Description

### TECHNICAL FIELD

The present disclosure is in the field of autonomous driving, in particular a method and system for generating simulated radar data using a neural network and a method for training the neural network.

### BACKGROUND

Autonomous driving technologies have advanced significantly over recent years. However, ADAS/AD testing is a highly non-trivial task due to the rarity of safety-critical edge cases in the recordings used for training/validation. Synthetic data generation techniques can mitigate the inherent rarity of these critical edge cases in the real world. However, while camera and LiDAR simulation have well-established methods, radar sensors (commonly included in mass-produced vehicles) lack an efficient and accurate sensor simulation solution.

High-fidelity numerical radar simulators take days to months to run while traditional neural network-based solutions operate on low-level signals which might not generalize to different sensors.

Existing methods include a NeRF-inspired method where the problem of radar simulation is solved by a novel view synthesis from implicit reflectance and transmittance maps using range-Doppler images. The main disadvantage of this approach is that it cannot generalize to unseen scenarios and retraining is required for each new scene.

### SUMMARY

High-fidelity numerical radar simulators take days to months to run while traditional neural network-based solutions operate on low-level signals which might not generalize to different sensors. Considering the problem formulation, the present solution simulates the radar output (for example, the radar data including one or more radar targets and/or a radar target list) which can directly be used for training/validating AD systems instead of a low-level signal. In addition, this approach is also capable of operating in real-time. The present disclosure provides a neural network-based method for radar simulation. Since LiDAR and camera sensors can be accurately modeled using classical methods, the neural network is able to take data from these sensors as input and predict what a radar sensor would detect in real time.

According to a first aspect of the present disclosure, a method for generating simulated radar data using a neural network includes: receiving environment data; generating a learned input representation based on the environment data; generating, using the neural network, one or more radar feature maps based on the learned input representation, wherein the one or more radar feature maps includes a channel of objectness value configured to indicate whether a target exists in a corresponding pixel of the one or more radar feature maps; and generating the radar data based on the learned input representation and the one or more radar feature maps.

This is a neural network-based method for radar simulation. Since LiDAR and camera sensors can be accurately modeled using classical methods, the network can take data from these sensors as input and predict what a radar sensor would detect in real time.

In some embodiments, the environment data may include a LiDAR point cloud and/or one or more camera images; and/or the radar data may include a radar point cloud; and/or the radar data may be in a form of 2D or 3D; and/or the neural network may be configured to predict a bounding box center of a radar target based on the radar data.

In some embodiments, the generating a learned input representation based on the environment data may include processing the LiDAR point cloud by a neural network to generate a Birds' Eye View (BEV) image, wherein the learned input representation of the LiDAR point cloud may be the BEV image.

In some embodiments, the generating a learned input representation based on the environment data may include: processing the LiDAR point cloud by a neural network operating in Bird's-Eye View, BEV, to generate a BEV image; transforming features of the one or more camera images to a BEV feature representation by a lifting method; and combing the BEV feature representation with the BEV image to generate the learned input representation.

In some embodiments, the neural network may include a first neural network and a second neural network, the generating one or more radar feature maps based on the learned input representation from the neural network may include: processing, by the first neural network, the learned input representation to produce one or more intermediate feature maps; and processing, by the second neural network, the one or more intermediate feature maps to produce the one or more radar feature maps, wherein each of the one or more radar feature maps may receive information from the intermediate feature maps.

In some embodiments, the method may further include adjusting a number of channels for the one or more intermediate feature maps by the second neural network.

In some embodiments, the one or more radar feature maps may include multiple channels, the multiple channels including any of a channel of height, a channel of x offset, a channel of y offset, a channel of speed and/or a channel of Radar Cross Section, RCS.

In some embodiments, the generating the radar data based on the learned input representation and the one or more radar feature maps may include: determining one or more targets based on the channel of objectness value of the one or more radar feature maps and the learned input representation; and reconstructing the radar data based on the one or more targets.

In some embodiments, the determining one or more targets based on the channel of objectness value of the one or more radar feature maps and the learned input representation may include: determining an objectness threshold, wherein, when an objectness value of one pixel of the one or more radar feature maps is above the objectness threshold, the target may exist in the pixel; upsampling the one or more radar feature maps to BEV representation, wherein pixels of the one or more radar feature maps may correspond to cells of the learned input representation; and determining the one or more targets in the learned input representation by comparing the objectness value of the pixels of the one or more radar feature maps with the objectness threshold.

In some embodiments, the determining an objectness threshold may include: performing a validation procedure on multiple objectness value after training the neural network; comparing performance metrics at the multiple objectness value, wherein the performance metric may include any of accuracy, precision, recall and/or false positivity rate; and determining the objectness threshold based on the comparison of the performance metrics.

According to a second aspect of the present disclosure, a method for training a neural network to generate simulated radar data includes: receiving training environment data and a radar BEV image; generating a training learned input representation based on the training environment data; generating, using the neural network, one or more training radar feature maps based on the training learned input representation; downsampling the radar BEV image to one or more GT, Ground Truth, radar feature maps; comparing the one or more training radar feature maps and the one or more GT radar feature maps; calculating a loss function based on the comparison between the one or more training radar feature maps and the one or more GT radar feature maps; and adjusting weights of the neural network to minimize the loss function; and wherein the simulated radar data is generated by: receiving environment data; generating a learned input representation based on the environment data; generating, using the neural network, one or more radar feature maps based on the learned input representation from the neural network, wherein the one or more radar feature maps include a channel of objectness value configured to indicate whether a target exists in a corresponding pixel of the one or more radar feature maps; and generating the radar data based on the learned input representation and the one or more radar feature maps.

In some embodiments, the GT radar feature maps may include multiple sets of channels for more than one target and/or the loss function is a weighted sum of multiple terms.

In some embodiments, the method may further include: generating one or more objectness maps based on the one or more training radar feature maps, wherein the one or more objectness maps show the objectness value of each pixel of the one or more training radar feature maps; and monitoring performance metrics of one or more objectness maps during training and validating the neural network, wherein the performance metric may include any of accuracy, precision, recall and/or false positive rate.

In some embodiments, the method may further include: reconstructing a training radar point cloud and a GT radar point cloud based on the one or more training radar feature maps and the one or more GT radar point clouds; and calculating a chamfer distance and a ratio of cardinalities of the training radar point cloud and the GT radar point cloud.

According to a third aspect of the present disclosure, a system for generating simulated radar data using a neural network includes: a receiving module configured to receive environment data; a generating module configured to generate a learned input representation based on the environment data; a feature generating module configured to generate, using the neural network, one or more radar feature maps based on the learned input representation, wherein the one or more radar feature maps include a channel of objectness value configured to indicate whether a target exists in a corresponding pixel of the one or more radar feature maps; and a radar generation module configured to generate the radar data based on the learned input representation and the one or more radar feature maps.

One typical use case of the present invention can be to utilize it for testing perception neural network performance. Other use cases include the extension of the current radar simulation used in commercial ADAS simulators or equivalents thereof . The present invention could be an alternative to the physics-based radar simulation in commercial ADAS simulators or equivalents thereof. It can be used in any other fields where a radar target list is required.

These and other features, aspects, and advantages will be apparent from a reading of the following detailed description and a review of the associated drawings. It is to be understood that both the foregoing general description and the following detailed description are explanatory and do not restrict aspects as claimed.

### BRIEF DESCRIPTION OF THE DRAWINGS

The present disclosure is further described in terms of exemplary embodiments. These exemplary embodiments are described in detail with reference to the drawings. The drawings are not drawn to scale. These embodiments are non-limiting exemplary embodiments, in which like reference numerals represent similar structures throughout the several views of the drawings, and wherein:
FIG. 1 is a flowchart illustrating an exemplary process 100 for generating simulated radar data using a neural network according to some embodiments of the present disclosure.
FIG. 2 is a schematic diagram of an exemplary architecture 200 for generating radar feature maps according to some embodiments of the present disclosure.
FIG. 3 is a flowchart illustrating an exemplary process 300 for training the neural network according to some embodiments of the present disclosure.
FIG. 4 is a block diagram illustration an exemplary general radar simulation system 400 according to some embodiments of the present disclosure.

### DETAILED DESCRIPTION

The following description is presented to enable any person skilled in the art to make and use the present disclosure and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present disclosure is not limited to the embodiments shown but is to be accorded the widest scope consistent with the claims.

The terminology used herein is for the purpose of describing particular example embodiments only and is not intended to be limiting. As used herein, the singular forms "a", "an", and "the" may be intended to include the plural forms as well, unless the context clearly indicates otherwise. It will be further understood that the terms "comprise", "comprises", and/or "comprising", "include", "includes", and/or "including," when used in this specification, specify the presence of stated features, integers, steps, operations, elements, and/or components, but do not preclude the presence or addition of one or more other features, integers, steps, operations, elements, components, and/or groups thereof.

The following abbreviations and acronyms are provided for convenience and may be used throughout this disclosure: AD (Autonomous driving), ADAS (Advanced driver assistance systems), BEV (Bird's-eye-view), CNN (Convolutional neural network), GT (Ground truth) and RCS (Radar cross section). These terms are exemplary, non-limiting, and should be interpreted broadly to include equivalent terminology and variations as understood by a person skilled in the art.

These and other features, and characteristics of the present disclosure, as well as the methods of operation and functions of the related elements of structure and the combination of portions and economies of manufacture, may become more apparent upon consideration of the following description with reference to the accompanying drawings, all of which form a part of this disclosure. It is to be expressly understood, however, that the drawings are for the purpose of illustration and description only and are not intended to limit the scope of the present disclosure. It is understood that the drawings are not to scale.

The flowcharts used in the present disclosure illustrate operations that systems implement according to some embodiments of the present disclosure. It is to be expressly understood, the operations of the flowchart may be implemented not in order. Conversely, the operations may be implemented in inverted order, or simultaneously. Moreover, one or more other operations may be added to the flowcharts. One or more operations may be removed from the flowcharts.

Also, the functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way, but may also be configured in ways that are not listed.

In order to make the purpose, technical solution, and advantages of the present disclosure clearer, the present disclosure will be further described in detail below with reference to the accompanying drawings and embodiments. It should be understood that the specific embodiments described herein are merely illustrative of the present disclosure and are not intended to limit the present disclosure.

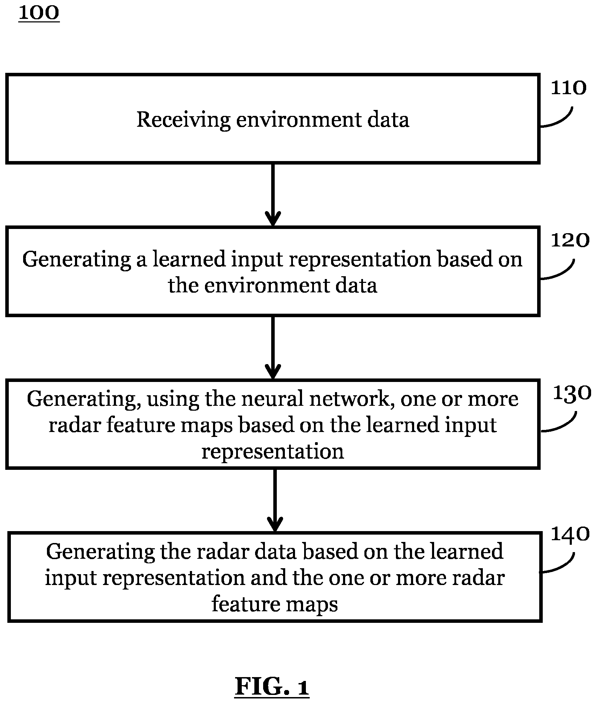

FIG. 1 is a flowchart illustrating an exemplary process 100 for generating simulated radar data using a neural network according to some embodiments of the present disclosure. A radar simulation system is able to perform the exemplary process 100. The system includes the neural network. In some embodiments, the neural network is the system.

In step 110, the system receives environment data. For example, one or more sensors is able to provide the environment data. The one or more sensors may include (but are not limited to) LiDAR, camera sensors or any combination thereof. As an example, the one or more sensors can be installed in any vehicle, while the environment data can reflect surrounding environment of the vehicle. As another example, the one or more sensors can be accurately modeled using classical methods. The environment data may include but not limited to LiDAR point clouds, camera images or any combination thereof. In some embodiments, the neural network can receive the environment data.

In step 120, the system generates a learned input representation based on the environment data. In some embodiments, the neural network can generate the learned input representation based on the environment data.

After obtaining the learned input representation, the radar reconstruction problem can be formulated as a 2D object detection task. In detail, 3D detection can be represented in a top-down (i.e., bird's eye) view with an additional height property of the 2D objects, trained on a separate channel. By reducing the problem space from 3D to 2D, the complexity of the task can be significantly decreased. This simplification can lead to a solution that is easier to implement and computationally cheaper, making it more efficient. Some radar systems may not provide elevation angles, meaning they can only detect objects in 2D (x and y coordinates) without height information. In the following steps, this method allows for simulating the radar output (for example, the radar data including one or more radar targets and/or a radar targets list) for both types of radars: those that provide 3D output (including height) and those that only provide 2D output. This makes the method versatile and applicable to various radar systems.

In some embodiments, the neural network can generate the learned input representation based on the LiDAR point cloud. Specifically, the neural network can process the LiDAR point cloud to generate a Birds' Eye View (BEV) image. The learned input representation of the LiDAR point cloud may be the BEV image. In an example, the learned input representation of the LiDAR point cloud may include the BEV image with the additional height property of the BEV image.

In some embodiments, the neural network can generate the learned input representation based on the LiDAR point cloud and the camera image. Camera image(s) can be optionally included to provide more comprehensive environmental information. In order to combine these with LiDAR data, a lifting method which transforms features of the camera image(s) onto the 2D ground plane can be applied. This BEV feature representation can then be combined with the corresponding LiDAR BEV image. Specifically, the neural network can transform features of the camera image(s) to a BEV feature representation by a lifting method. The lifting method can be a technique used to project or transform features from the camera image(s) onto a common reference plane, which is also 2D in this case. This transformation may align the features from the camera image(s) with the spatial representation used by the LiDAR data, making it possible to combine the two. After applying the lifting method, the features from the camera image(s) can be represented in a bird's-eye view (BEV) format. This BEV feature representation is a top-down view of the scene, similar to how the LiDAR data is represented. The BEV format allows for a consistent and unified representation of both camera and LiDAR data, facilitating their integration. Then the neural network can combine the BEV feature representation of the camera image(s) with the BEV image of the LiDAR point cloud to generate the learned input representation. By the combination, the method can leverage the strengths of both sensors. The camera can provide rich visual details, while the LiDAR can offer precise spatial information. Therefore, the combination can improve the accuracy and robustness of radar simulation and other relevant tasks.

In some embodiments, the neural network can generate the learned input representation based on the camera image(s). For example, the camera image(s) can be transformed to a BEV image, which can work as the learned input representation.

In step 130, the neural network generates one or more radar feature maps based on the learned input representation. The one or more radar feature maps includes a channel of objectness value configured to indicate whether a target exists in a corresponding pixel of the one or more radar feature maps.

In some embodiments, the learned input representation may be the BEV image generated based on the LiDAR and/or camera data. As an example, the neural networks can receive the LiDAR point cloud after bird's-eye view (BEV) projection as input.

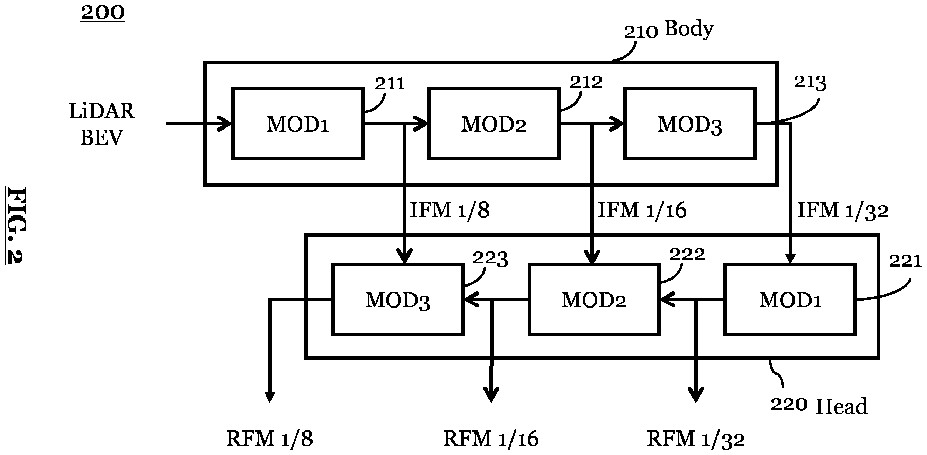

FIG. 2 is a schematic diagram of an exemplary architecture 200 for generating radar feature maps according to some embodiments of the present disclosure. The neural network may include one or more CNNs (Convolutional Neural Network). The one or more CNNs is able to process the learned input representation to generate one or more radar feature maps.

In some embodiments, the neural network may include two CNNs, body 210 (e.g., the first neural network) and head 220 (e.g., the second neural network). The first neural network can process the learned input representation to produce one or more intermediate feature maps. The second neural network can process the one or more intermediate feature maps to produce the one or more radar feature maps. Each of the one or more radar feature maps can receive information from the intermediate feature maps.

As an example, the body 210 may include multiple sub-modules, for example three sub-modules in FIG.2: MOD1 211, MOD2 212 and MOD3 213. The head 220 may also include multiple sub-modules corresponding to that of the body 210, for example three sub-modules in FIG.2: MOD1 221, MOD2 222 and MOD3 223. Specifically, the learned input representation (for example, the BEV images, the LiDAR BEV images) can be first given to a so-called body 210 which is a CNN that outputs three intermediate feature maps (IFM in FIG.2) with 1/8, 1/16 and 1/32 of the linear size of the input image. in some embodiments, the body 210 can use the convolutional part of ResNet18 or other neural network. For example, customized PointPillars can be used for LiDAR point clouds, and ResNet50 can be used for images.

The learned input representation (for example, the BEV images) can first pass through the MOD1 211, which can process the image and generate the first intermediate feature map (IFM 1/8) with 1/8 of the liner size of the input BEV image. The output from the MOD1 211 (IFM 1/8) can then be passed to MOD2 212, which can further process it to generate the second intermediate feature map (IFM 1/16) with 1/16 of the liner size of the input BEV image. The output from the MOD 2 212 (IFM 1/16) can be subsequently passed to the MOD3 213, which can process it to generate the third intermediate feature map (IFM 1/32) with 1/32 of the linear size of the input BEV image.

Subsequently, these intermediate feature maps can be then passed through another CNN, the head 220, which can produce the radar feature maps for each scale. As an example, each radar feature map can receive information from the intermediate feature maps of the same scale and smaller. Specifically, the MOD1 221 can receive information from the IFM 1/32 to produce radar feature map 1/32 (RFM 1/32). The MOD2 222 can receive information from the IFM 1/16 and the IFM 1/32 to produce the RFM 1/16. TheMOD3 223 can receive information from the IFM 1/8, the IFM1/16, and optionally the IFM 1/32 to produce the RFM 1/8. This approach can leverage the strengths of features at different scales to enrich information of the radar feature maps, improve target detection capabilities. As another example, the IFM 1/32 can be passed to MOD1 221, generating the RFM 1/32. The IFM 1/16 can be passed to MOD2 222, generating the RFM 1/16. The IFM 1/8 can be passed to MOD3 223, generating the RFM 1/8.

It should be noted that FIG. 2 is merely provided for the purposes of illustration, and not intended to limit the scope of the present disclosure. For persons having ordinary skill in the art, multiple variations and modifications may be made under the teachings of the present disclosure. However, those variations and modifications do not depart from the scope of the present disclosure. As an example, the input could be camera BEV image, or camera and LiDAR BEV image. The number of sub-modules within the body 210 or the head 220 could be other numbers except three. The number of IFM or RFM could also be changed accordingly.

In some embodiments, the second neural network can adjust a number of channels for the one or more intermediate feature maps. For example, the head 220 can convert the feature maps to have the required number of channels, each including different types of information. For example, one channel may include the so-called objectness value which is one when the given pixel in the BEV image corresponds to a target and zero otherwise. Additional channels may include the height, intensity, and velocity of the target. For example, the additional channels may include but not limited to any of a channel of height, a channel of x offset, a channel of y offset, a channel of speed and/or a channel of Radar Cross Section, RCS.

In step 140, the system generates the radar data based on the learned input representation and the one or more radar feature maps.

In some embodiments, the system can determine one or more targets based on the channel of objectness value of the one or more radar feature maps and the learned input representation. Then, the system can reconstruct the radar data based on the one or more target.

In some embodiments, an objectness threshold is set. If objectness value of one pixel of the one or more radar feature maps is above the objectness threshold, the target could exist in the pixel. The one or more radar feature maps can be transformed to BEV representation by upsampling. Pixels of the one or more radar feature maps correspond to cells of the learned input representation. The system can determine the one or more targets in the learned input representation by comparing the objectness value of the pixels of the one or more radar feature maps with the objectness threshold.

Briefly, the radar feature maps can separate the learned input representation (e.g., original BEV image) into a plurality lattice by upsampling. Specifically, each pixel of the radar feature map can correspond to one lattice of the BEV image. Each lattice of the BEV image contains a plurality of pixels of the BEV image. According to the channel of the objectness value, the system can detect whether each pixel of each lattice contains a target. The objectness value is above the objectness threshold if the corresponding pixel of the lattice contains a target, while it is below the objectness threshold when the correspond pixel of the lattice does not contain a target. After determining the one or more targets, the pixels with target can constitute the radar data.

Specifically, the raw output of the neural network in the previous step 130 can be visualized as a collection of cells covering the original BEV image. For scale 1/n, one cell covers n^2 pixels. The maximal number of potential targets in one cell is fixed before training the network. For each target in the given cell, the first two channels can contain the x and y offsets of the potential target from the upper left corner of the cell. The third channel can be the predicted objectness value which varies between 0 and 1 and is related to the probability of a successful detection. For example, the objectness value could be 1 in the GT if the projection of a radar point belongs to the appropriate pixel in BEV. Additional channels may contain information regarding the height, speed, and RCS of the predicted target. The maximal number of targets per cell can be adjusted.

As an example, the raw output is transformed to BEV representation by upsampling the 1/8-scale output. For each target in the feature map, the system can add the x and y offsets to its column and row indices and then multiply them by the inverse scale factor (i.e., 8) to obtain the corresponding column and row indices in the BEV image.

In order to reconstruct the radar data (for example, the radar point cloud) from the learned input representation (for example, the BEV image), first, the smallest predicted objectness value, the so-called objectness threshold, should be determined, which can still be considered as a successful detection of a target. For this purpose, a separate validation procedure needs to be performed after training and compare accuracy, precision, recall, and false positivity rate at different objectness thresholds to find the optimal value. Then, the pixels whose objectness value is above the threshold can yield the elements of the radar data. Their x and y coordinates can be obtained from their positions on the BEV image (after compensating with the offset values) and their z coordinates can be given by the height value of the pixels.

In some embodiments, the radar data can refer to the radar output of any radar sensor. The radar data may include one or more radar targets. The one or more radar targets may form a radar target list. The neural network can be configured to predict a bounding box center of the radar target based on the radar data. The neural network used may be an implementation of any architecture (for example, the unimodal neural network such as YOLOv3, the multimodal neural network) with the modification to predict bounding box centres only (as radar targets), without box sizes (that is, with bounding boxes of zero extension/area). It should be noted that the architecture employed in the present invention is not limited to the unimodal neural network, the multimodal neural network, and any other equivalent or functionally similar architectures may be used without departing from the scope of this disclosure. Any future modifications, adaptations, or refinements that do not constitute an inventive step but achieve similar functional objectives shall be considered within the scope of this disclosure.

In some embodiments, the radar target can be a combination of different attributes (e.g. position in BEV indicated by the objectness value of a pixel, refined position using the offset, height, etc). Since the radar target may not have a proper extent, the bounding box width/length prediction can be omitted. Besides this, the whole target reconstruction can be modeled by BEV object detection.

In some embodiments, the objectness threshold can be determined in the following steps: performing a validation procedure on multiple objectness value after training the neural network; comparing performance metrics at the multiple objectness value, wherein the performance metric may include any of accuracy, precision, recall and/or false positivity rate; and determining the objectness threshold based on the comparison of the performance metrics. For example, the user can perform a separate validation procedure after training and compare accuracy, precision, recall, and false positivity rate at different objectness thresholds to find the optimal value.

In some embodiments, the radar data may include a radar point cloud. The radar data may be in a form of 2D or 3D.

Compared with a traditional radar simulation method outputting azimuth-range images from General Motors, the method of the present disclosure does not require environmental simulation and do not have access to the real azimuth-range image. Therefore, the present solution is simpler and probably faster.

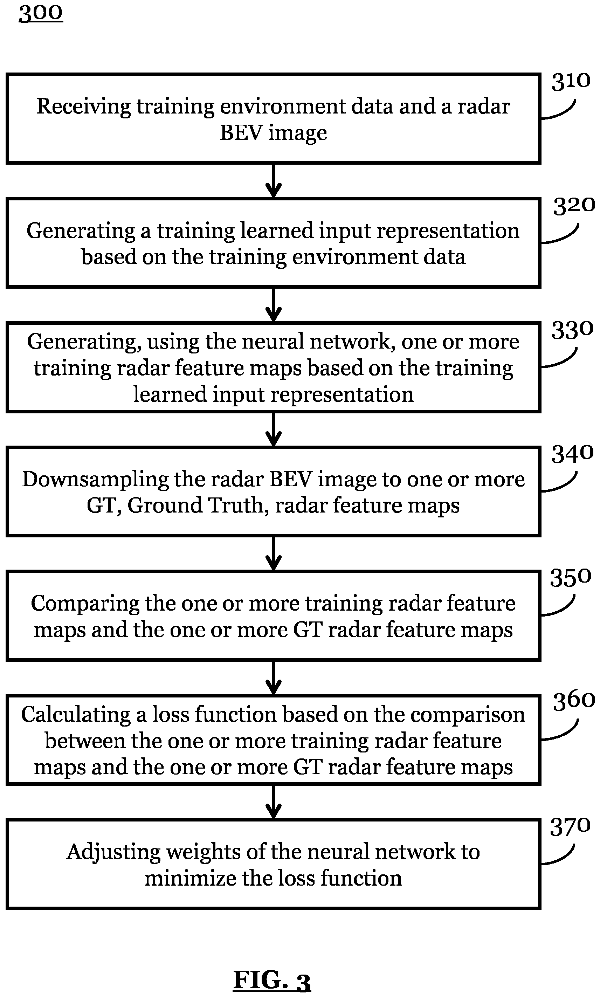

FIG. 3 is a flowchart illustrating an exemplary process 300 for training the neural network according to some embodiments of the present disclosure. The trained neural network is used in the process of generating simulated radar data. A training system can be configured to perform the training process.

In step 310, the training system receives training environment data and a radar BEV image. For example, one or more sensors is configured to provide the training environment data. The one or more sensors may include but not limited to LiDAR, camera sensors or any combination thereof. As an example, the one or more sensors can be installed in any vehicle, while the environment data can reflect surrounding environment of the vehicle. As another example, the one or more sensors can be accurately modeled using classical methods. The training environment data may include but not limited to LiDAR point clouds, camera images or any combination thereof. A radar sensor can be configured to obtain radar data which corresponds to the training environment data. The radar data can be transformed to the radar BEV image.

In some embodiments, the training data can be provided by real LiDAR sensors. The input in inference time could be the simulated LiDAR or the real LiDAR. The data simulation with the real LiDAR may perform better than the data simulation with simulated LiDAR due to the Sim2Real domain gap.

In step 320, the training system generates a training learned input representation based on the training environment data. In some embodiments, the system (for example, the neural network of the system) can process the training environment data to generate a training BEV image as the learned input representation. The step 320 may be identical to, substantially similar to, or a technical equivalent of the step 120, as described in Fig. 1, and may be implemented in various embodiments, modifications, substitutions, or alternative configurations without departing from the scope of the present disclosure.

In step 330, the neural network generates one or more training radar feature maps based on the training learned input representation. For example, the neural network may process the training BEV image to generate one or more training radar feature maps with multiple scales. The step 330 may be identical to, substantially similar to, or a technical equivalent of the step 130 of FIG. 1 and the method of FIG.2, and may be implemented in various embodiments, modifications, substitutions, or alternative configurations without departing from the scope of the present disclosure.

In step 340, the training system downsamples the radar BEV image to one or more GT, Ground Truth, radar feature maps. As an example, the one or more GT radar feature maps are obtained by downsampling the radar BEV image to the selected scale (1/8, 1/16 or 1/32). The selected scales can correspond to the multiple scales of the one or more training radar feature maps. In some embodiments, it is possible for two or more targets from the radar BEV image to occupy the same pixel in the downsampled feature map, so multiple sets of channels can be used to store more than one target per GT radar feature map pixel.

In step 350, the training system compares the one or more training radar feature maps and the one or more GT radar feature maps. In step 360, the training system calculates a loss function based on the comparison between the one or more training radar feature maps and the one or more GT radar feature maps. In step 370, the system adjusts weights of the neural network to minimize the loss function.

In some embodiments, the neural network can be trained by minimizing the loss function. The loss function can be a weighted sum of multiple terms. For example, the system can compute binary cross-entropy terms for the offsets and objectness, along with L1 losses for height, RCS and speed between the one or more training radar feature maps and the one or more GT radar feature maps. First the system can sum these terms separately for every feature map scale, then take a weighted sum of all terms. Weights can be adjusted during training to yield the best result. In the loss functions, the train system can compare the predicted and the GT radar feature maps. These maps are obtained by downsampling the radar BEV image to the selected scale (1/8, 1/16 or 1/32). It is possible for two or more targets from the BEV image to occupy the same pixel in the downsampled feature map, so multiple sets of channels can be used to store more than one target per feature map pixel.

In some embodiments, the GT radar feature maps may correspond to actual radar feature maps if an actual radar sensor provides information of the radar BEV image. Because the above one or more training radar feature maps are generated by the neural network, they may correspond to predicted radar feature maps.

This process can provide feedback on the neural network's performance, guide the optimization of the neural network, and improve the trained neural network's accuracy, robustness, and multi-task handling capabilities. By iteratively performing the training process, the neural network can progressively learn and improve, leading to more accurate simulation of the radar data.

In some embodiments, in addition to the loss function described above, the training system can also monitor a multitude of metrics during training and validation. These metrics may include but not limited to accuracy, precision, recall and false positive rate that are computed for the objectness maps. Furthermore, the training system can also calculate the Chamfer distance and the ratio of cardinalities of the GT and reconstructed point clouds. Specifically, one or more objectness maps can be generated based on the one or more training radar feature maps. The one or more objectness maps can show the objectness value of each pixel of the one or more training radar feature maps. The system can monitor performance metrics (for example, accuracy, precision, recall and false positive rate) of one or more objectness maps during training and validating the neural network.

While the loss function provides a primary objective for optimization, additional metrics like accuracy, precision, recall, and false positive rate are crucial for a holistic evaluation of the neural network's performance. These metrics can guide improvements, ensure robustness, and help in making informed decisions about the neural network's deployment, ensuring it is reliable and effective for real-world applications.

In some embodiments, the training system can also calculate the Chamfer distance and the ratio of cardinalities of the GT and reconstructed point clouds. Specifically, a training radar point cloud and a GT radar point cloud can be reconstructed based on the one or more training radar feature maps and the one or more GT radar point clouds; and the training system can calculate a Chamfer distance and a ratio of cardinalities of the training radar point cloud and the GT radar point cloud.

Calculating the Chamfer distance and the ratio of cardinalities between the GT and reconstructed point clouds provides a comprehensive evaluation of 3D reconstruction quality. Chamfer distance assesses geometric similarity, while the ratio of cardinalities evaluates completeness and coverage. Together, these metrics help in optimizing neural networks for accurate and reliable 3D reconstructions, ensuring that the reconstructed point clouds are both geometrically accurate and appropriately dense.

The trained neural network is used in the process of generating simulated radar data. Specifically, the simulated radar data is generated by: receiving environment data; generating a learned input representation based on the environment data; generating, using the neural network, one or more radar feature maps based on the learned input representation from the neural network, wherein the one or more radar feature maps includes a channel of objectness value configured to indicate whether a target exists in a corresponding pixel of the one or more radar feature maps; and generating the radar data based on the learned input representation and the one or more radar feature maps.

In some embodiments, the training method can be used for large-scale training. Preliminary results could show promising outcomes. More extensive evaluation could increase performance and robustness of the resulting models.

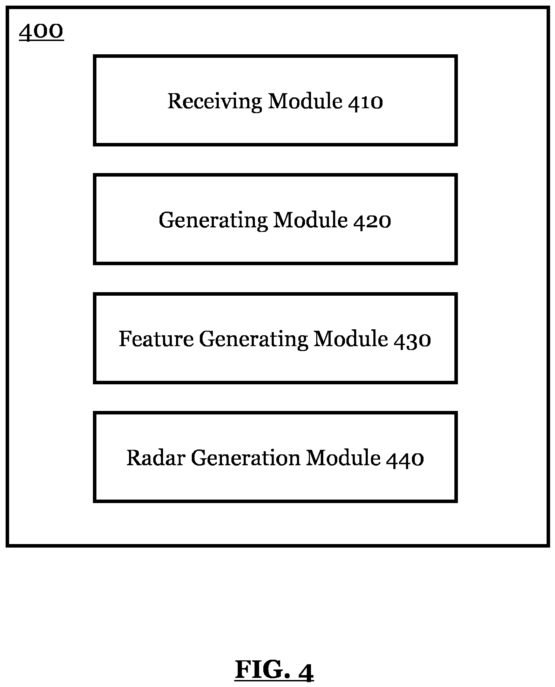

FIG. 4 is a block diagram illustration an exemplary general radar simulation system 400 according to some embodiments of the present disclosure. The system 400 includes a receiving module 410, a generating module 420, a feature generating module 430 and a radar generation module 440. The receiving module 410 is configured to perform the step 110. The generating module 420 is configured to perform the step 120. The feature generating module 430 is configured to perform the step 130. The radar generation module 440 is configured to perform the step 140. In some embodiments, the feature generating module 430 can employ the architecture 200 depicted in FIG. 2.

High-fidelity numerical radar simulators take days to months to run while conventional neural network-based solutions operate on low-level signals which might not generalize to different sensors. This solution is specific considering the problem formulation: it simulates the target list which can directly be used for training/validating AD systems instead of a low-level signal. In addition, this method is also capable of operating in real-time. The presented method can formulate the radar reconstruction problem as a 2D object detection task. In detail, 3D detection can be represented in a top-down (i.e., bird's eye) view with an additional height property of the 2D objects, trained on a separate channel. In this way, the problem space can be reduced to 2D from 3D, which is a simple and computationally cheaper solution. Additionally, some radars may not provide elevation angles for radar targets; therefore, this method allows for simulating targets for both types (i.e., those providing 3D or 2D output).

It should be noted that the above description is merely provided for the purposes of illustration, and not intended to limit the scope of the present disclosure. For persons having ordinary skill in the art, multiple variations and modifications may be made under the teachings of the present disclosure. However, those variations and modifications do not depart from the scope of the present disclosure.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "unit", "module" or "system". Furthermore, aspects of the present disclosure may take the form of a computer program product embodied in one or more computer readable media having computer readable program code embodied thereon.

Furthermore, the recited order of processing elements or sequences, or the use of numbers, letters, or other designations, therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

## Claims

1. A method for generating simulated radar data using a neural network, comprising:
receiving environment data;
generating a learned input representation based on the environment data;
generating, using the neural network, one or more radar feature maps based on the learned input representation, wherein the one or more radar feature maps comprise a channel of objectness value configured to indicate whether a target exists in a corresponding pixel of the one or more radar feature maps; and
generating the radar data based on the learned input representation and the one or more radar feature maps.

2. The method of claim 1, wherein
the environment data comprises a LiDAR point cloud and/or one or more camera images; and/or
the radar data comprises a radar point cloud; and/or
the radar data is in a form of 2D or 3D; and/or
the neural network is configured to predict a bounding box center of a radar target based on the radar data.

3. The method of claim 2, the generating a learned input representation based on the environment data comprising:
processing the LiDAR point cloud by a neural network to generate a Birds' Eye View (BEV) image, wherein the BEV image is the learned input representation of the LiDAR point cloud.

4. The method of claim 2, the generating a learned input representation based on the environment data comprising:
processing the LiDAR point cloud by a neural network operating in Bird's-Eye View, BEV, to generate a BEV image;
transforming features of the one or more camera images to a BEV feature representation by a lifting method; and
combining the BEV feature representation with the BEV image to generate the learned input representation.

5. The method of any of claims 1 to 4, wherein the neural network comprises a first neural network and a second neural network, the generating one or more radar feature maps based on the learned input representation from the neural network comprising:
processing, by the first neural network, the learned input representation to produce one or more intermediate feature maps; and
processing, by the second neural network, the one or more intermediate feature maps to produce the one or more radar feature maps, wherein each of the one or more radar feature maps receives information from the intermediate feature maps.

6. The method of claim 5, further comprising:
adjusting a number of channels for the one or more intermediate feature maps by the second neural network.

7. The method of any of claims 1 to 6, wherein the one or more radar feature maps comprise multiple channels, the multiple channels comprising any of a channel of height, a channel of x offset, a channel of y offset, a channel of speed and/or a channel of Radar Cross Section, RCS.

8. The method of any of claims 1 to 7, the generating the radar data based on the learned input representation and the one or more radar feature maps comprising:
determining one or more targets based on the channel of objectness value of the one or more radar feature maps and the learned input representation; and
reconstructing the radar data based on the one or more targets.

9. The method of claim 8, the determining one or more targets based on the channel of objectness value of the one or more radar feature maps and the learned input representation comprising:
determining an objectness threshold, wherein, when an objectness value of one pixel of the one or more radar feature maps is above the objectness threshold, the target exists in the pixel;
upsampling the one or more radar feature maps to BEV representation, wherein pixels of the one or more radar feature maps correspond to cells of the learned input representation; and
determining the one or more targets in the learned input representation by comparing the objectness value of the pixels of the one or more radar feature maps with the objectness threshold.

10. The method of claim 9, the determining an objectness threshold comprising:
performing a validation procedure on multiple objectness value after training the neural network;
comparing performance metrics at the multiple objectness value, wherein the performance metric comprises any of accuracy, precision, recall and/or false positivity rate; and
determining the objectness threshold based on the comparison of the performance metrics.

11. A method for training a neural network to generate simulated radar data, comprising:
receiving training environment data and a radar BEV image;
generating a training learned input representation based on the training environment data;
generating, using the neural network, one or more training radar feature maps based on the training learned input representation;
downsampling the radar BEV image to one or more GT, Ground Truth, radar feature maps ;
comparing the one or more training radar feature maps and the one or more GT radar feature maps;
calculating a loss function based on the comparison between the one or more training radar feature maps and the one or more GT radar feature maps; and
adjusting weights of the neural network to minimize the loss function; and
wherein the simulated radar data is generated by:
receiving environment data;
generating a learned input representation based on the environment data;
generating, using the neural network, one or more radar feature maps based on the learned input representation from the neural network, wherein the one or more radar feature maps comprise a channel of objectness value configured to indicate whether a target exists in a corresponding pixel of the one or more radar feature maps; and
generating the radar data based on the learned input representation and the one or more radar feature maps.

12. The method of claim 11, wherein the GT radar feature maps comprise multiple sets of channels for more than one target and/or the loss function is a weighted sum of multiple terms.

13. The method of claims 11 or 12, further comprising:
generating one or more objectness maps based on the one or more training radar feature maps, wherein the one or more objectness maps show the objectness value of each pixel of the one or more training radar feature maps; and
monitoring performance metrics of one or more objectness maps during training and validating the neural network, wherein the performance metric comprises any of accuracy, precision, recall and/or false positive rate.

14. The method of any of claims 11 to 13, further comprising:
reconstructing a training radar point cloud and a GT radar point cloud based on the one or more training radar feature maps and the one or more GT radar point clouds; and
calculating a chamfer distance and a ratio of cardinalities of the training radar point cloud and the GT radar point cloud.

15. A system for generating simulated radar data using a neural network, the system comprising:
a receiving module configured to receive environment data;
a generating module configured to generate a learned input representation based on the environment data;
a feature generating module configured to generate, using the neural network, one or more radar feature maps based on the learned input representation, wherein the one or more radar feature maps comprise a channel of objectness value configured to indicate whether a target exists in a corresponding pixel of the one or more radar feature maps; and
a radar generation module configured to generate the radar data based on the learned input representation and the one or more radar feature maps.
